**Europäisches Patentamt**

(19) **European Patent Office**

**Office européen des brevets**

(11) **EP 1 344 178 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(21) Anmeldenummer: **00987427.2**

(22) Anmeldetag: **20.12.2000**

(51) Int Cl.⁷: $G06K\ 7/00$

(86) Internationale Anmeldenummer:
**PCT/EP2000/013049**

(87) Internationale Veröffentlichungsnummer:
**WO 2002/050758 (27.06.2002 Gazette 2002/26)**

(54) **VORRICHTUNG UND VERFAHREN ZUM GLEICHZEITIGEN AUSLESEN VON PASSIVEN INDUKTIVEN TRANSPONDERN**

DEVICE AND METHOD FOR THE SIMULTANEOUS READING OF PASSIVE INDUCTIVE TRANSPONDERS

DISPOSITIF ET PROCEDE DE LECTURE SIMULTANEE DE TRANSDUCTEURS INDUCTIFS PASSIFS

(84) Benannte Vertragsstaaten:
**AT BE CH CY DE DK ES FI FR GB GR IE IT LI LU MC NL PT SE TR**

(43) Veröffentlichungstag der Anmeldung:
**17.09.2003 Patentblatt 2003/38**

(60) Teilanmeldung:
**03005959.6 / 1 357 503**

(73) Patentinhaber: **Fraunhofer-Gesellschaft zur Förderung der angewandten Forschung e.V. 80686 München (DE)**

(72) Erfinder:
• **CHRISTOFFERS, Niels**
  **47058 Duisburg (DE)**
• **NIEDERHOLZ, Jürgen**
  **47647 Kerken (DE)**
• **HAMMERSCHMIDT, Dirk**
  **9504 Villach (AT)**
• **VOM BÖGEL, Gerd**
  **42489 Wülfrath (DE)**

(74) Vertreter: **Schoppe, Fritz, Dipl.-Ing. et al Patentanwälte Schoppe, Zimmermann, Stöckeler & Zinkler, Postfach 246 82043 Pullach bei München (DE)**

(56) Entgegenhaltungen:
**EP-A- 0 625 832       WO-A-00/28674
DE-C- 4 438 287       FR-A- 2 757 952
GB-A- 2 274 373**

## Beschreibung

Die vorliegende Erfindung bezieht sich auf Vorrichtungen und Verfahren, die ein gleichzeitiges Auslesen von Transpondern ermöglichen, und insbesondere solche Verfahren und Vorrichtungen, die ein gleichzeitiges Auslesen von passiven induktiven Transpondern ermöglichen, die in einem Stapel angeordnet sind, so daß die Spulen der Transponder miteinander eng magnetisch gekoppelt sind.

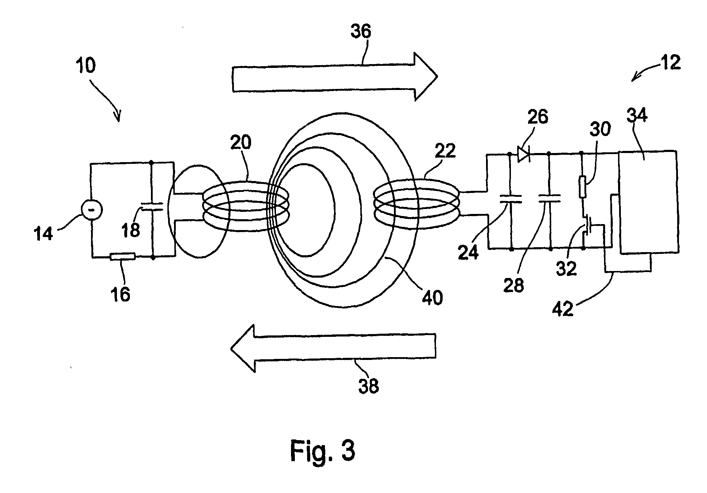

Im folgenden wird bezugnehmend auf Fig. 3 ein herkömmliches Transpondersystem beschrieben, das aus einer Basisstation 10 und einem Transponder 12, die in Fig. 3 schematisch dargestellt sind, besteht. Die Basisstation 10 umfaßt in der vereinfachten Darstellung eine Leistungsquelle 14, einen Widerstand 16, der mit der Leistungsquelle seriell verbunden ist, und einen Kondensator 18, der parallel zu der Serienschaltung aus Leistungsquelle 14 und Widerstand 16 geschaltet ist. Parallel zu dem Kondensator 18 ist eine Sendespule 20 geschaltet. Die Spule 20 stellt zusammen mit dem Kondensator 18 somit einen Parallelresonanzkreis dar, der bei dem vereinfachten Beispiel durch den Widerstand. 16 und die Leistungsquelle 14, in der Realität durch die Leistungsendstufe, belastet ist.

Der Transponder 12 umfaßt eine Transponderspule 22 und einen Abstimmkondensator 24. Die Transponderspule 22 und der Abstimmkondensator 24 definieren einen Parallelresonanzkreis. Ferner ist bei der vereinfachten schematischen Darstellung des Transponders 12 eine Gleichrichterdiode 26 zwischen den Parallelresonanzkreis und einen Kondensator 28 zur Energiespeicherung geschaltet. Parallel zu dem Kondensator 28 ist eine variable Last, bestehend aus Widerstand 30 und Schalter 32 angeordnet. Ferner ist eine Transponder-ASIC 34 (ASIC = Application-Specific Integrated Circuit = anwendungsspezifische integrierte Schaltung) vorgesehen, die auf die dargestellte Weise mit dem Schalter 32 verbunden ist.

Die Basisstation 10 versorgt den Transponder 12 induktiv mit Energie 36, während der Transponder mit Hilfe des Lastmodulationsverfahrens Transponderdaten 38 zurücksendet. Der Transponder ist dabei ein passiver Transponder, der keine zusätzliche Energiequelle benötigt.

In der Basisstation 10 erzeugt ein Strom in der Sendespule 20 ein magnetisches Wechselfeld 40 bei einer Betriebsfrequenz $f_B$. Die Transponderspule 22 des Transponders 12 ist im Nahfeldbereich der Sendespule 20 angeordnet, so daß das magnetische Wechselfeld 40 auf die Transponderspule 22 trifft und dort eine elektrische Spannung induziert. Die induzierte Spannung dient dem Transponder-ASIC 34 als Betriebsspannung, die über den Gleichrichter 26 und den Kondensator 28 gewonnen wird.

Um Daten zu senden, schaltet die Transponder-ASIC 34 durch ein Datensignal 42 gesteuert über den Schalter 32 den Widerstand 30 parallel zu dem Kondensator 28, d.h. die Transponder-ASIC 34 schaltet die variable Last an. Dadurch vergrößert sich die Leistungsaufnahme des Transponders. Durch diese Leistungsaufnahme des Transponders wird das von der Sendespule 20 erzeugte Feld geschwächt. Als Folge davon steigt in der Basisstation 10 die Spannung an dem zwischen der Sendespule und der Leistungsendstufe vorhandenen Widerstand, der in Fig. 3 schematisch als Widerstand 16 gezeigt ist. Diese Spannungsänderungen in der Basisstation 10 können erfaßt werden, um das von dem Transponder 12 gesendete Datensignal 42 wieder zu rekonstruieren, wobei ein solches Verfahren als Lastmodulation bezeichnet wird.

Bei einem Transpondersystem, wie es oben bezugnehmend auf Fig. 3 erläutert wurde, muß die in die Transponderspule 22 induzierte Spannung größer als die Betriebsspannung der Transponder-ASIC sein. Um dies zu ermöglichen, ist parallel zu der Transponderspule 22 der Abstimmkondensator 24 geschaltet, der mit der Transponderspule 22 einen Resonanzkreis bildet. Bei dem gezeigten Transpondersystem liegt die Resonanzfrequenz des Transponder-Resonanzkreises bei der Betriebsfrequenz $f_B$, so daß in Abhängigkeit von der Frequenz die induzierte Spannung bei der Betriebsfrequenz $f_B$ ein lokales Maximum aufweist.

Befinden sich nun mehrere Transponder im Feld der Sendespule einer Basisstation und sind diese Transponder miteinander eng magnetisch gekoppelt, beeinflussen sich die Transponder gegenseitig. Diese Beeinflussung betrifft neben der Güte der jeweiligen Transponderresonanzkreise auch die Resonanzfrequenz der Transponderresonanzkreise, so daß diese nicht mehr mit der Betriebsfrequenz übereinstimmt. Bisher war es nicht möglich, einen Stapel von passiven induktiven Transpondern, die derart zueinander angeordnet sind, daß die Spule derselben miteinander eng magnetisch gekoppelt sind, mit Energie zu versorgen und auszulesen.

Aus der EP-A-0625832 ist ein Transpondersystem bekannt, das aus einem Transponder und einem Lesegerät besteht, das automatisch abstimmbar ist, um mit der Resonanzfrequenz des Transponders zu arbeiten.

Aus der GB-A-2274373 ist ein System zum Erfassen gestapelter Objekte bekannt. Die gestapelten Objekte sind mit Transpondern ausgestattet, welche der Reihe nach durch ein gebündeltes Feld eines Transponderabfragegeräts abgefragt werden. Das Feld soll schräg zu einer Bewegungsrichtung der gestapelten Objekte angeordnet werden.

Die FR-A-2757952 offenbart ein Transpondersystem zur Abfragung einer Mehrzahl von Transpondern mittels einer einzigen Basisstation, bei dem nicht angesprochene Transponder ihre Antenne mittels einer Anpassvorrichtung derart einstellen, dass sie eine geringere Absorption des elektromagnetischen Feldes vornehmen als die Antenne eines ausgewählten Transponders.

Die DE-C-4438287 zeigt eine System zur kontaktlosen Energieund Datenübertragung zwischen einer mobilen und einer stationären Station, bei dem in der mobilen Station Schaltmittel zum Zuschalten von Kapazitäten parallel zum Schwingkreis der mobilen Station zum Zwecke der Abstimmung vorgesehen sind.

Aus der WO 00/28674 (entspr. EP-A-1 061 663) ist ein Transpondersystem bekannt, bei dem zur Identifizierung eines Transponders in einer Gruppe von einander überlappenden Transpondern eine Mehrzahl von einzeln in den Schwingkreis einschaltbaren Kondensatoren zur Durchstimmung des Resonanzkreises vorgesehen ist. Die Ansprüche wurden gegen dieses Dokument abgegrenzt.

Die der vorliegenden Erfindung zugrundeliegende Aufgabe besteht darin, Vorrichtungen und Verfahren zu schaffen, die es ermöglichen, in einem Stapel angeordnete Transponder mit Energie zu versorgen und auszulesen.

Diese Aufgabe wird durch eine Tranponderlesevorrichtung nach Anspruch 1 und ein Verfahren zum Auslesen einer Mehrzahl von Transpondern nach Anspruch 8 gelöst.

Die vorliegende Erfindung schafft gemäß einem ersten Aspekt eine Transponderlesevorrichtung zum Auslesen einer Mehrzahl von induktiven passiven Transpondern, die einen Resonanzkreis aufweisen, mit folgenden Merkmalen:

einer Sendespule zum Erzeugen eines magnetischen Wechselfeldes mit einer Betriebsfrequenz $f_B$, in dem die Mehrzahl von Transpondern derart plazierbar ist, daß dieselben magnetisch miteinander gekoppelt sind; und

einer Nachstimmeinrichtung, die in dem magnetischen Wechselfeld angeordnet ist und eine solche frequenzabhängige Impedanz aufweist, daß eine durch das magnetische Wechselfeld in den Resonanzkreisen der Transponder induzierte Spannung im Bereich der Betriebsfrequenz $f_B$ ein Maximum aufweist.

Gemäß einem weiteren Aspekt schafft die vorliegende Erfindung ein Verfahren zum Auslesen einer Mehrzahl von induktiven passiven Transpondern, die einen Resonanzkreis aufweisen, mit folgenden Schritten:

Erzeugen eines magnetischen Wechselfeldes mit einer Betriebsfrequenz $f_B$;

Plazieren der Mehrzahl von Transpondern in dem magnetischen Wechselfeld derart, daß die Transponder magnetisch miteinander gekoppelt sind;

Plazieren einer Nachstimmeinrichtung in dem magnetischen Wechselfeld, die eine solche frequenzabhängige Impedanz aufweisen, daß eine durch das magnetische Wechselfeld in die Resonanzkreise der Transponder induzierte Spannung im Bereich der Betriebsfrequenz $f_B$ ein Maximum aufweist; und

Empfangen von durch die Transponder ansprechend auf die induzierte Spannung erzeugten Daten.

Die vorliegende Erfindung basiert zunächst auf der Erkenntnis, daß sich, wenn mehrere Transponder im Feld der Sendespule angeordnet sind und diese miteinander eng magnetisch gekoppelt sind, die Schaltelemente an den Klemmen jeder Transponderspule an den Klemmen jeder anderen abbilden. Somit entsteht ein elektrisches Netzwerk, das gekoppelte Spulen enthält. Dieses Netzwerk ist kein einfacher Resonanzkreis mehr. Die induzierte Spannung nimmt bei der Betriebsfrequenz kein lokales Maximum mehr an und ist somit nicht mehr groß genug, um die Transponder-ASIC mit Energie zu versorgen.

Vielmehr wird bei einer Mehrzahl von Transpondern, die in einer engen magnetischen Kopplung zueinander im magnetischen Wechselfeld der Sendespule angeordnet sind, durch jede Transponderspule, d.h. durch jeden Transponderschwingkreis, ein Maximum der Spannung bzw. des Stroms, die in die Transponderspulen induziert wird, bewirkt. Diese Maxima treten bei verschiedenen Frequenzen auf, wobei, sobald ein weiterer Transponder im magnetischen Wechselfeld hinzukommt, sich die Frequenzlagen sämtlicher Maxima ändern. Ist die Sendespule ebenfalls Teil eines Schwingkreises, wie bei dem oben bezugnehmend auf Fig. 3 beschriebenen Beispiel, wird auch durch den Schwingkreis der Sendespule ein Maximum der in die Transponderspulen induzierten Spannung bewirkt.

Wie oben erwähnt wurde, beeinflussen sich die verschiedenen Schwingkreise gegenseitig, so daß abhängig von der Anzahl und der Beschaffenheit der gestapelten Transponderspulen die Spannungsmaxima Frequenzlagen aufweisen, die von den Resonanzfrequenzen, auf die die einzelnen Transponderresonanzkreise abgestimmt sind, abweichen. Somit können die Transponder nicht ausgelesen werden. Da die Transponder feste Bauelementgrößen besitzen, beispielsweise eine Transponderspuleninduktivität von 5 µH und eine Abstimmkapazität von 2 pF, ist ein Zugriff auf die Resonanzfrequenz der Resonanzkreise der Transponder nicht möglich. Darüberhinaus existieren gesetzliche Vorgaben für die Betriebsfrequenz $f_B$, so daß auch diese nicht geändert werden kann, wobei eine gängige Betriebsfrequenz für Transpondersysteme bei 13,56 MHz liegt.

Erfindungsgemäß wird daher eine Nachstimmeinrichtung in das Nahfeld der Sendespule eingebracht, derart, daß die Amplituden der in die Transponderspulen induzierten Spannungen, und die zu diesen Spannungen proportionalen induzierten Ströme, bei der Betriebsfrequenz $f_B$, d.h. der Frequenz der Sendespannung, ein lokales Maximum annehmen, und ausreichend groß sind, damit die Transponder-ASIC mit Energie versorgt werden kann. Erfindungsgemäß weist die Nachstimmeinrichtung, die in die Nähe des Transponderstapels und somit das Nahfeld der Sendespule gebracht wird, vorzugsweise eine oder mehrere Spulen, die mit den Transponderspulen magnetisch koppeln, auf. Mit der Spule der Nachstimmeinrichtung kann zur Erzeugung eines Resonanzkreises ein Kondensator verbunden sein. Ferner können weitere Netzwerkelemente, beispielsweise Widerstände oder weitere Spulen, mit der Spule verbunden sein.

Durch die in das magnetische Wechselfeld der Basisstation eingebrachte Nachstimmeinrichtung zeigen die in die Transponder induzierten Spannungen bzw. Ströme ein zusätzliches Maximum, dessen Frequenzlage durch ein entsprechendes Auswählen der frequenzabhängigen Impedanz der Nachstimmeinrichtung eingestellt werden kann. So kann die Frequenzlage dieses zusätzlichen Maximums eingestellt werden, um mit der Betriebsfrequenz $f_B$ zusammenzufallen, so daß alle Transponder bei der Betriebsfrequenz ausgelesen werden können. Ferner werden durch das Einbringen der Nachstimmeinrichtung in das magnetische Wechselfeld die anderen Maxima der in die Transponderspule induzierten Spannung bzw. des in dieselben induzierten Stroms verschoben werden, wobei eines dieser Maxima auf die Betriebsfrequenz $f_B$ verschoben werden kann. Das zusätzliche Maximum wird für eine kleine Anzahl von Transpondern im Transponderstapel verwendet, während ein verschobenes Maximum bei einer großen Anzahl von Transpondern im Transponderstapel verwendet wird.

Gemäß bevorzugten Ausführungsbeispielen der vorliegenden Erfindung ist die frequenzabhängige Impedanz der Nachstimmeinrichtung vorzugsweise veränderbar, wobei ferner vorzugsweise eine Einrichtung zum Verändern der frequenzabhängigen Impedanz vorgesehen ist, bis alle Transponder in einem Transponderstapel antworten. Somit ist es möglich, ein sicheres Auslesen aller Transponder in einem Transponderstapel ohne Kenntnis der Anzahl der Transponder in dem Stapel zu gewährleisten.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:

Fig. 1 eine schematische Darstellung zur Erläuterung des Prinzips, auf dem die vorliegende Erfindung basiert;

Fig. 2 eine schematische Darstellung eines Ausführungsbeispiels der vorliegenden Erfindung; und

Fig. 3 eine schematische vereinfachte Darstellung eines bekannten Transpondersystems.

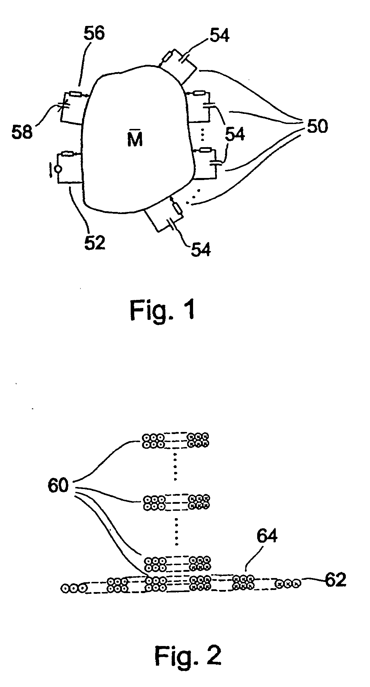

Bezugnehmend auf die schematischen Darstellungen der Fig. 1 und 2 wird nachfolgend ein bevorzugtes Ausführungsbeispiel der vorliegenden Erfindung näher erläutert.

In Fig. 1 ist schematisch eine Anordnung aus vier Transpondern 50 gezeigt, die in einem Stapel derart angeordnet sind, daß die Spulen (in Fig. 1 nicht gezeigt) der Transponder miteinander eng magnetisch gekoppelt sind. Ferner ist in Fig. 1 eine Basisstation 52 gezeigt, die eine Transponderlesevorrichtung oder eine Transponder-Lese/Schreib-Einrichtung sein kann, wie sie oben bezugnehmend auf Fig. 3 erläutert wurde. Im folgenden wird die vorliegende Erfindung jeweils anhand einer Lesevorrichtung beschrieben, wobei für Fachleute jedoch klar ist, daß die Basisstation entsprechende Einrichtungen aufweisen kann, um auch ein Beschreiben von im magnetischen Wechselfeld derselben angeordneten Transpondern zu ermöglichen.

Die Transponder 50, die beispielsweise den oben bezugnehmend auf Fig. 3 beschriebenen Aufbau aufweisen, sind im Nahfeld der Sendespule (in Fig. 1 nicht gezeigt) der Lesevorrichtung 52 angeordnet.

Die Sendespule der Lesevorrichtung 52 erzeugt ein magnetisches Wechselfeld bei einer Betriebsfrequenz $f_B$. Die Resonanzkreise der Transponder 50 sind über jeweilige Abstimmkondensatoren 54 auf eine Resonanzfrequenz abgestimmt. Bei üblichen Transpondersystemen, die zum Auslesen eines einzelnen Transponders dienen, liegt die Resonanzfrequenz des Resonanzkreises des Transponders bei der Betriebsfrequenz der Lesevorrichtung. Bei der in Fig. 1 gezeigten Anordnung beeinflussen sich jedoch die Resonanzfrequenzen der Resonanzkreise der einzelnen Transponder 50, so daß dieselben bei der Betriebsfrequenz $f_B$ der Lesevorrichtung nicht ausgelesen werden können.

Gemäß der vorliegenden Erfindung ist daher im magnetischen Wechselfeld der Lesevorrichtung 52 eine Nachstimmeinrichtung 56 vorgesehen. Die Nachstimmeinrichtung besteht bei dem bevorzugten Ausführungsbeispiel der vorliegenden Erfindung aus einem Schwingkreis, dessen Spule (in Fig. 1 nicht gezeigt) mit denen der Transponder magnetisch gekoppelt ist. Die magnetische Kopplung der Spulen der Transponder 50, der Lesevorrichtung 52 und der Nachstimmeinrichtung 56 ist in Fig. 1 durch das Zeichen für einen magnetischen Übertrager M angedeutet. Bei bevorzugten Ausführungsbeispielen der vorliegenden Erfindung ist der Schwingkreis der Nachstimmeinrichtung 56 verstimmbar, wie in Fig. 1 durch einen einstellbaren Kondensator 58 gezeigt ist. Alternativ könnte auch die Induktivität der Spule der Nachstimmeinrichtung 56 oder beide Größen verstellt werden.

Durch die Nachstimmeinrichtung wird ein zusätzliches Maximum in den Strömen bzw. Spannungen, die in den Transponderspulen der Transponder 50 induziert werden, erzeugt. Ferner werden die durch jede der Transponderspulen erzeugten Maxima bezüglich ihrer Frequenzlage verschoben. Dadurch kann durch eine geeignete Auswahl der frequenzabhängigen Impedanz der Nachstimmeinrichtung 56 bewirkt werden, daß eines der Spannungs- bzw. Strom-Maxima, die in den Transponderspulen induziert werden, bei der Betriebsfrequenz $f_B$ liegt, so daß bei der Betriebsfrequenz $f_B$, die gesetzlich vorgeschrieben ist, alle Transponder eines Transponderstapels ausgelesen werden können.

Fig. 2 zeigt eine schematische Darstellung einer möglichen Anordnung der Spulen bei einer erfindungsgemäßen Transponderlesevorrichtung zueinander. In Fig. 2 sind schematisch die Transponderspulen 60 von vier in einem Stapel angeordneten Transpondern gezeigt. Ferner ist in Fig. 2 schematisch eine Sendespule 62 der Lesevorrichtung und eine Spule 64 der erfindungsgemäßen Nachstimmeinrichtung gezeigt. Es sei darauf hingewiesen, daß Fig. 2 eine schematische Querschnittansicht der jeweiligen Spulen darstellt. Bei der Anordnung gemäß Fig. 2 sind die Transponder des Transponderstapels mit den Transponderspulen 60 im magnetischen Wechselfeld der Sendespule 62 derart angeordnet, daß sie miteinander eng magnetisch gekoppelt sind und daß sie ferner mit der Spule 64 der Nachstimmeinrichtung eng magnetisch gekoppelt sind.

Im nachfolgenden wird mathematisch der Einfluß der Nachstimmeinrichtung auf die in die Transponderspulen induzierten Spannungen bzw. Ströme dargelegt. Die induzierten Spannungen sind proportional zu den induzierten Strömen. Bei der folgenden Betrachtung werden anstelle der Spannungen die Ströme betrachtet, wobei das elektrische Netzwerk, wie es beispielsweise in Fig. 1 gezeigt ist, das die gekoppelten Spulen der Transponder, der Lesevorrichtung und der Nachstimmeinrichtung enthält, mit Hilfe der Maschenstromanalyse untersucht wird. Die Maschen sind die Transponderschwingkreise und der Stromkreis der Sendespule. Der Vektor der Quellspannungen heiße $\bar{u}_0$. Es existiert nur eine Quellspannung im Stromkreis der Sendespule. Der Vektor der Ströme durch die Spulen heiße $\bar{i}$. Es gilt:

$$\bar{u}_0 = \bar{\bar{Z}}_M \, \bar{i} \qquad (1)$$

In Gleichung (1) stellt $\bar{\bar{Z}}_M$ die Maschenimpedanzmatrix der Transponderschwingkreise dar. Sie enthält auf der Hauptdiagonalen die komplexen. Impedanzen der Transponderschwingkreise und auf den Nebendiagonalen Terme, die durch die Gegeninduktivitäten hervorgerufen werden. Die Ströme berechnen sich somit zu:

$$\bar{i} = \bar{\bar{Z}}_M^{-1} \, \bar{u}_0 \qquad (2)$$

Es gilt weiterhin:

$$\bar{\bar{Z}}_M^{-1} = \frac{\bar{A}}{\det \bar{\bar{Z}}_M} \qquad (3)$$

Die Matrix $\bar{A}$ ist dabei die Matrix der Adjunkten von $\bar{\bar{Z}}_M$.

Es sei nun angenommen, daß die Transponder in einem Stapel angeordnet sind und ihre Anzahl N betrage. In Abhängigkeit der Frequenz nehmen die Ströme in den N Transponderspulen N Maxima an, auch wenn die Resonanzkreise aller Transponder auf die gleiche Resonanzfrequenz eingestellt sind. Der Grund dafür ist die gegenseitige Beeinflussung der Transponder durch die enge magnetische Kopplung derselben. Wo diese N Maxima liegen, ist durch die Lösung der Gleichung

$$\det \bar{\bar{Z}}_M = 0 \qquad (4)$$

bestimmt. Sie verteilen sich auf ein Frequenzband, in dessen zweitem Drittel die Resonanzfrequenz $f_R$, auf die die einzelnen Transponder abgestimmt sind, liegt. Die untere Grenze des Bandes, d.h. die tiefste Frequenz, bei der ein Strommaximum bei einer gegebenen Anordnung auftritt, heiße $f_u$. Bei $f = f_u$ nimmt der induzierte Strom das absolute Maximum an. Mit steigender Frequenz fallen die Höhen der Maxima. Wird N vergrößert, sinkt die Frequenz $f_u$, nähert sich jedoch einem unteren Grenzwert $f_{u,min}$.

Wie bereits ausgeführt wurde, fallen aufgrund der vorgegebenen Transponderparameter sowie der festgelegten Betriebsfrequenz $f_B$ die Maxima des induzierten Stroms nicht mit der Betriebsfrequenz $f_B$ zusammen. Damit die Transponder jedoch mit Energie versorgt werden können, müssen die Amplituden der induzierten Ströme bei der Frequenz der Sendespannung $f_B$ ein lokales Maximum annehmen. Bei welcher Frequenz diese Ströme ein Maximum annehmen, wird ausschließlich durch die Lösungen der Gleichung (3) und damit durch $\bar{\bar{Z}}_M$ bestimmt. Die Position der Transponder im Stapel hat dabei keinen Einfluß, solange eine enge magnetische Kopplung derselben vorliegt. Hat der Entwickler die Spulengeometrien, die Windungszahlen, die Abstände der Transponderspulen, die Resonanzfrequenz und die Güte der Transponderschwingkreise festgelegt, hängt $\bar{\bar{Z}}_M$ nur noch von N, d.h. der Anzahl der Transponder bzw. Transponderspulen, ab. Die Erfinder haben daher erkannt, daß ein System, das alle in einem Stapel mit beliebiger Anzahl N angeordnete Transponder bei einer Frequenz, d.h. der Betriebsfrequenz $f_B$, mit Energie versorgen kann, eine von N unabhängige Einflußgröße auf $\bar{\bar{Z}}_M$ besitzen muß. Diese kann dann in Abhängigkeit von N so verändert werden, daß stets eine der durch Lösen der Gleichung (3) zu findenden Maxima bei $f_B$ liegt.

$\underline{Z}_M$ wird mit Hilfe der Maschenstromanalyse gewonnen. Als Maschen können die aus den Transponderspulen und den damit verbundenen Kondensatoren und Widerständen aufgebauten Resonanzkreise und der aus der Sendespule und der Spannungsquelle aufgebaute Schaltkreis festgelegt werden. Soll $\underline{Z}_M$ verändert werden, müssen dem Netzwerk zusätzliche Maschen hinzugefügt werden. Solche zusätzlichen Maschen werden durch das erfindungsgemäße Einbringen einer Nachstimmeinrichtung in das magnetische Wechselfeld in enger magnetischer Kopplung zu den Transponderspulen hinzugefügt. Dadurch wird in der Matrix $\underline{Z}_M$ für jede zusätzliche Masche unten eine Zeile und rechts eine Spalte angefügt. Damit besitzt die Gleichung (1) andere Lösungen. Die Amplituden der in den Transponderspulen induzierten Ströme nehmen somit bei anderen Frequenzen Maxima an. Durch eine geeignete Einstellung der frequenzabhängigen Impedanz der Nachstimmeinrichtung kann somit eines der Maxima auf die Betriebsfrequenz $f_B$ eingestellt werden.

Beim erfindungsgemäßen Einbringen der Nachstimmeinrichtung zeigt sich, daß ein zusätzliches Maximum der Amplitude der induzierten Ströme erzeugt wird, was mit Hilfe einer Computersimuation gezeigt werden kann. An dieser Stelle sei angemerkt, daß die erzeugten Strommaxima jeweils in allen Transponderspulen auftreten, was durch eine Betrachtung der Gleichungen 1 bis 4 ohne weiteres ersichtlich ist. Neben der Erzeugung des zusätzlichen Maximums bewirkt das Einbringen der Nachstimmeinrichtung auch eine Verschiebung der durch die einzelnen Transponderresonanzkreise selbst erzeugten Strommaxima. Für eine kleine Anzahl von Transpondern im Stapel N ist das durch die Nachstimmeinrichtung erzeugte Maximum bei Frequenzen $f < f_u$ stärker ausgeprägt als bei Frequenzen $f > f_u$. Somit werden die Transponder vorzugsweise so abgestimmt, daß bei einer kleinen Anzahl von Transpondern im Stapel N $f_u > f_B$ ist. Die Impedanz der Nachstimmeinrichtung wird bei einer kleinen Anzahl der Transponder vorzugsweise derart eingestellt, daß die Frequenz, bei der das zusätzliche Strommaximum auftritt, mit der Betriebsfrequenz $f_B$ zusammenfällt.

Alternativ könnten die Transponder zu einer anderen Resonanzfrequenz hin abgestimmt werden. Beispielsweise könnte bei einer kleinen Anzahl von Transpondern $f_u \approx f_B$ gelten. Sobald dann N wächst, wird $f_u < f_B$. Es ist sehr unwahrscheinlich, daß nun eines der anderen Maxima, die durch die Transponder erzeugt werden, bei der Betriebsfrequenz $f_B$ liegt. Die Nachstimmeinrichtung müßte eingesetzt werden, um ein Maximum der Frequenz f mit $f=f_B>f_u$ zu erzeugen. Ob ein solches Verfahren zweckmäßig ist, kann anhand der Höhe des durch die Nachstimmeinrichtung hervorgerufenen Maximums beantwortet werden.

Gilt $f_u > f_B$ erzeugt die Nachstimmeinrichtung ein Maximum bei einer Frequenz mit $f=f_B$, also mit $f<f_u$. Für $f_u<f_B$ erzeugt sie ein Maximum der Frequenz $f=f_B>f_u$. Wie sich beispielsweise in Computersimulationen zeigen läßt, ist das Maximum für $f<f_u$ sehr viel stärker ausgeprägt als für $f>f_u$. Für $f<f_u$ sind also kleinere Feldstärken der Sendespule notwendig, um in den Transponderspulen ausreichende Ströme zu induzieren. Es ist darum zweckmäßig, die Transponder so abzustimmen, daß $f_u>f_B$ gilt. In diesem Fall kann ferner ausgenutzt werden, daß $f_u$ gegen einen unteren Grenzwert $f_{u,min}$ konvergiert, so daß, wenn $f_{u,min}=f_B$, die Transponder automatisch richtig abgestimmt sind, sobald ihre Anzahl groß genug ist.

Bei einer großen Anzahl von Transpondern in dem Stapel ist das zusätzliche Maximum schwächer ausgeprägt, so daß es bei einer großen Anzahl von Transpondern im Transponderstapel bevorzugt sein kann, daß durch die Nachstimmeinrichtung eine Verschiebung eines durch einen der Transponderresonanzkreise bewirkten Strommaxima in die Betriebsfrequenz $f_B$ bewirkt wird.

Wie bereits oben angemerkt wurde, nähert sich ohne die Abstimmeinrichtung die Frequenz $f_u$, bei der das erste Strommaximum auftritt, einem unteren Grenzwert $f_{u,min}$. Befindet sich eine so große Anzahl von Transpondern in dem Transponderstapel, daß das erste Strommaximum bei der minimalen Grenzfrequenz $f_{u,min}$ auftritt, so daß auch das Einbringen weiterer Transponder in den Transponderstapel kein weiteres Absinken der Frequenz, bei der dieses Maximum auftritt, bewirkt, ist es möglich, alle Transponder ohne die Verwendung einer Abstimmeinrichtung auszulesen, indem die Transponder, d.h. die Resonanzkreise derselben, so abgestimmt werden, daß $f_{u,min} = f_B$ gilt. Somit weist, wenn sich zumindest eine solche Anzahl von Transpondern im Feld der Sendespule befindet, daß die untere Grenzfrequenz $f_{u,min}$ erreicht ist, die Amplitude des in die Spulen induzierten Stroms bei $f_B$ ein Maximum auf, so daß die Transponder mit Energie versorgt werden und damit ausgelesen werden können.

Was unter einer großen bzw. kleinen Anzahl von Transpondern zu verstehen ist, ergibt sich aus der minimalen Betriebsspannung der Tansponder-ASICs, der Güte der Transponderschwingkreise und der Stärke des Magnetfelds der Sendespule, wie im folgenden erläutert wird.

Im Bereich um die Frequenz des absoluten Maximums $f_u$ läßt sich ein Frequenzband definieren, so daß die Transponder arbeiten können, sobald $f_B$ innerhalb dieses Bands liegt. Die induzierte Spannung ist dort größer als eine durch die Betriebsspannung der ASICs vorgegebene Spannung. Das Band wird breiter, wenn das Verhältnis der in den Transponderspulen induzierten Spannung zur minimalen Betriebsspannung der ASICs steigt. Die induzierte Spannung ist proportional zur magnetischen Feldstärke des Felds der Sendespule, so daß die Breite des Bands mit zunehmender Feldstärke steigt. Die Güte beeinflußt die Breite des Bands auf zwei Wegen. Durch eine steigende Güte steigt die induzierte Spannung. Gleichzeitig wird aber die sogenannte 3dB-Bandbreite kleiner, die dem Maximum zugeordnet wird. Mit ihr sinkt auch die Bandbreite des Bands, in dem die Betriebsfrequenz $f_B$ liegen muß, damit der Transponder mit Energie versorgt werden kann. Eine optimale Güte ergibt sich daher aus einem Kompromiß.

Das Frequenzband verschiebt sich wie $f_u$ mit zunehmender Anzahl N der Transponder zu kleineren Frequenzen. Eine große Anzahl der Transponder liegt dann vor, wenn die Betriebsfrequenz $f_B$ innerhalb des Frequenzbands um $f_u$ liegt, so daß die Transponder ohne Nachstimmeinrichtung betrieben werden können. Bei dieser Betrachtung wird vorausgesetzt, daß die Transponder so abgestimmt sind, daß der untere Grenzwert $f_{u,min}$ der Frequenz des ersten Maximums $f_u$ gleich der Betriebsfrequenz $f_B$ ist.

Wie oben ausgeführt wurde, wird als Nachstimmeinrichtung erfindungsgemäß vorzugsweise ein Schwingkreis mit einstellbarer Resonanzfrequenz durch Verändern der frequenzabhängigen Impedanz desselben verwendet. Indem somit die Kapazität des Kondensators und/oder die Induktivität der Spule in der Nachstimmeinrichtung verändert wird, kann dafür gesorgt werden, daß sich im Transponderstapel ein Maximum der Amplituden der Ströme bei $f = f_B$ ausbildet. Um bei unbekannter Anzahl von Transponderspulen ein Auslesen aller Spulen zu ermöglichen, können beispielsweise Zyklen zur Variation der Induktivität bzw. der Kapazität der Nachstimmeinrichtung durchlaufen werden, bis alle Transponder antworten. Die Tatsache, daß alle Transponder antworten, kann ohne weiteres in der Lesevorrichtung erfaßt werden, indem die aus dem magnetischen Wechselfeld entnommene Leistung beobachtet wird. Wenn alle Transponder gleichzeitig antworten, können Zeitmultiplex-Protokolle verwendet werden, um die Antwort der einzelnen Transponder auszuwerten, indem beispielsweise jedem Transponder ein Zeitschlitz zugeordnet wird.

Befindet sich eine feste Anzahl von Transpondern im Transponderstapel und sind alle anderen Parameter gleichbleibend, wie z. B. Spulengeometrien, Windungszahlen und Abstände der Transponderspulen, Resonanzfrequenz und Güte der Transponderschwingkreise usw., reicht es aus, einmal die frequenzabhängige Impedanz der Nachstimmeinrichtung zu bestimmen, die notwendig ist, um bei dieser festen Anzahl von Transpondern ein Auslesen demselben zu ermöglichen.

Die Güte der Transponderschwingkreise und die Feldstärke des Magnetfelds der Sendespule werden vorzugsweise unter Berücksichtigung der gesetzlichen Bestimmung und des Stromverbrauchs sowie der minimalen Betriebsspannungen der Transponder so gewählt, daß die Transponder möglichst unempfindlich gegen Fehlabstimmungen sind. Je breiter jedoch das Resonanzspektrum der Transponderschwingkreise wird, um eine Unempfindlichkeit gegen Fehlabstimmungen zu schaffen, eine desto höhere Sendeleistung ist erforderlich. Da jedoch die Sendeleistung innerhalb der gesetzlichen Normen bleiben muß, müssen die Resonanzspektren der Transponderschwingkreise entsprechend schmal gehalten werden.

Die Spule der Nachstimmeinrichtung wird vorzugsweise derart dimensioniert, daß sie mit den Transponderspulen minimal streuungsbehaftet gekoppelt ist. Die Kapazität soll sich im nicht zu erreichenden Idealfall wie bei einem streuungsfreien Transformator über das Windungszahlenverhältnis direkt an den Klemmen der Transponderspulen abbilden. Dann wären die Transponder zu einer kleineren Resonanzfrequenz hin verstimmt und das Frequenzband, in dem die Maxima auftreten, würde sich unmittelbar zu kleineren Frequenzen hin verschieben, so daß bei einer begrenzten Anzahl von Transpondern im Feld der Sendespule die Frequenz, bei der das absolute Maximum auftritt, d.h. die oben beschriebene Frequenz $f_u$, zu der Betriebsfrequenz $f_B$ hin verschoben werden kann.

Zusammenfassend bleibt festzustellen, daß erst das Einbringen einer Nachstimmvorrichtung gemäß der vorliegenden Erfindung ermöglicht, eine Mehrzahl von Transpondern gleichzeitig auszulesen. Dabei sei angemerkt, daß die Nachstimmeinrichtung zu diesem Zweck nicht zwingend durch einen Schwingkreis gebildet sein muß. Vielmehr kann jedes Element, das eine frequenzabhängige Impedanz aufweist, als Nachstimmeinrichtung dienen, wobei diese frequenzabhängige Impedanz vorzugsweise veränderbar ist, um, wie oben beschrieben, zu ermöglichen, eine unbekannte Anzahl von Transpondern auszulesen, indem die frequenzabhängige Impedanz entsprechend verändert wird, bis alle Transponder antworten. Die frequenzabhängige Impedanz kann dabei einfach durch eine kurzgeschlossene Spule gebildet sein oder durch eine Spule, die mit weiteren Netzwerkelementen, beispielsweise Kondensatoren, Widerständen oder Spulen, verbunden ist. Dabei können die Eigenschaften der Spulen und/oder der Netzwerkelemente in Abhängigkeit der Anzahl und Beschaffenheit der gestapelten Transponderspulen verändert werden, um das Auslesen einer unbekannten Anzahl von Transpondern zu ermöglichen.

Es muß nicht erwähnt werden, daß als Nachstimmeinrichtung gemäß der Erfindung auch mehrere Spulen bzw. mehrere Schwingkreise in das magnetische Wechselfeld der Sendespule und damit in eine magnetische Kopplung mit den Transponderspulen gebracht werden können. Ferner können auch mehrere Nachstimmeinrichtungen mit unterschiedlichen frequenzabhängigen Impedanzen als Nachstimmvorrichtungen nacheinander in das Feld der Sendespule eingebracht werden, wobei die unterschiedlichen frequenzabhängigen Impedanzen für eine jeweils unterschiedliche Anzahl von Transpondern festgelegt sind, so daß bei Vorliegen einer entsprechenden Anzahl von Transpondern im Stapel mittels der zugeordneten Nachstimmeinrichtung ausgelesen werden kann.

**Patentansprüche**

1.  Transponderlesevorrichtung zum Auslesen einer Mehrzahl von induktiven passiven Transpondern (50), die einen Resonanzkreis aufweisen, mit einer Sendespule (62) zum Erzeugen eines magnetischen Wechselfeldes mit einer Betriebsfrequenz $f_B$, in dem die Mehrzahl von Transpondern (50) derart plazierbar ist, dass dieselben magnetisch miteinander gekoppelt sind; **gekennzeichnet durch** eine Nachstimmeinrichtung (56), die in dem magnetischen Wechselfeld angeordnet ist und eine solche frequenzabhängige Impedanz aufweist, dass eine **durch** das magnetische Wechselfeld in die Resonanzkreise der Transponder (50) induzierte Spannung im Bereich der Betriebsfrequenz $f_B$ ein Maximum aufweist.

2.  Transponderlesevorrichtung nach Anspruch 1, bei der die Nachstimmeinrichtung eine Spule aufweist.

3.  Transponderlesevorrichtung nach Anspruch 2, bei der die Nachstimmeinrichtung ferner zumindest ein mit der Spule verbundenes weiteres Netzwerkelement aus der Gruppe von Kondensatoren, Widerständen und Spulen aufweist.

4.  Transponderlesevorrichtung nach einem der Ansprüche 1 bis 3, bei der die Nachstimmeinrichtung (56) einen Resonanzkreis aufweist.

5.  Transponderlesevorrichtung nach einem der Ansprüche 1 bis 4, bei der die frequenzabhängige Impedanz der Nachstimmeinrichtung (56) veränderbar ist.

6.  Transponderlesevorrichtung nach Anspruch 5, bei der der Resonanzkreis der Nachstimmeinrichtung (56) eine Spule (64) und einen Kondensator (58) aufweist, wobei die Induktivität der Spule und/oder die Kapazität des Kondensators des Resonanzkreises der Nachstimmeinrichtung (56) veränderbar sind.

7.  Transponderlesevorrichtung nach Anspruch 5 oder 6, die ferner eine Steuereinrichtung zum Verändern der Impedanz der Nachstimmeinrichtung (56) aufweist, bis eine durch das magnetische Wechselfeld in die Resonanzkreise der Transponder (50) induzierte Spannung im Bereich der Betriebsfrequenz $f_B$ ein Maximum aufweist.

8.  Verfahren zum Auslesen einer Mehrzahl von induktiven passiven Transpondern (50), die einen Resonanzkreis aufweisen, mit folgenden Schritten:

    Erzeugen eines magnetischen Wechselfelds mit einer Betriebsfrequenz $f_B$;

    Plazieren der Mehrzahl von Transpondern (50) in dem magnetischen Wechselfeld derart, dass die Transponder magnetisch miteinander gekoppelt sind; und

    Empfangen von durch die Transponder ansprechend auf die induzierte Spannung erzeugten Daten; **gekennzeichnet durch** den Schritt des

    Plazierens einer Nachstimmeinrichtung (56) in dem magnetischen Wechselfeld, die eine solche frequenzabhängige Impedanz aufweist, dass eine **durch** das magnetische Wechselfeld in die Resonanzkreise der Transponder induzierte Spannung im Bereich der Betriebsfrequenz $f_B$ ein Maximum aufweist.

9.  Verfahren nach Anspruch 8, bei dem der Schritt des Plazierens der Nachstimmeinrichtung (56) den Schritt des Veränderns der Impedanz der Nachstimmeinrichtung (56), bis die durch das magnetische Wechselfeld in die Resonanzkreise der Transponder (50) induzierte Spannung im Bereich der Betriebsfrequenz $f_B$ ein Maximum aufweist, aufweist.

**Claims**

1.  Transponder reading device for reading out a plurality of inductive passive transponders (50) having a resonant circuit, the device comprising:

    a transmitter coil (62) for generating an alternating magnetic field having an operating frequency $f_B$, in which the plurality of transponders (50) may be placed such that they are magnetically coupled to each other; **characterized by**

    a retuning means (56) arranged in the alternating magnetic field and having such a frequency-dependent impedance that a voltage induced in the resonant circuits of the transponders (50) by the alternating magnetic field has a maximum in the range of the operating frequency $f_B$.

2.  Transponder reading device as claimed in claim 1, wherein the retuning means comprises a coil.

3.  Transponder reading device as claimed in claim 2, wherein the retuning means further comprises at least one further network element which is connected to the coil and is selected from the group consisting of capacitors, resistors, and coils.

4.  Transponder reading device as claimed in any one of claims 1 to 3, wherein the retuning means (56) comprises a resonant circuit.

**5.** Transponder reading device as claimed in any one of claim 1 to 4, wherein the frequency-dependent impedance of the retuning means (56) is variable.

**6.** Transponder reading device as claimed in claim 5, wherein the resonant circuit of the retuning means (56) comprises a coil (64) and a capacitor (58), the inductance of the coil and/or the capacitance of the capacitor of the resonant circuit of the retuning means (56) being variable.

**7.** Transponder reading device as claimed in claim 5 or 6, which further comprises a control means for varying the impedance of the retuning means (56) until a voltage induced in the resonant circuits of the transponders (50) by the alternating magnetic field has a maximum in the range of the operating frequency $f_B$.

**8.** Method for reading out a plurality of inductive passive transponders (50) having a resonant circuit, the method comprising:

generating an alternating magnetic field having an operating frequency $f_B$;

placing the plurality of transponders (50) in the alternating magnetic field such that the transponders are magnetically coupled to each other; and

receiving data created by the transponders in response to the voltage induced; **characterized by** the step of

placing a retuning means (56) in the alternating magnetic field, the retuning means having such a frequency-dependent impedance that a voltage induced in the resonant circuits of the transponders by the alternating magnetic field has a maximum in the range of the operating frequency $f_B$.

**9.** Method as claimed in claim 8, wherein the step of placing the retuning means (56) includes the step of varying the impedance of the retuning means (56) until the voltage induced in the resonant circuits of the transponders (50) by the alternating magnetic field has a maximum in the range of the operating frequency $f_B$.

**Revendications**

**1.** Dispositif de lecture de transpondeurs destiné à lire une pluralité de transpondeurs passifs inductifs (50) présentant un circuit résonnant, avec :

une bobine d'émission (62) destinée à générer un champ magnétique alternatif à fréquence de fonctionnement $f_B$ dans lequel la pluralité de transpondeurs (50) peuvent être placés de sorte qu'ils soient couplés magnétiquement l'un à l'autre ; et
un dispositif d'accord (56) disposé dans le champ magnétique alternatif et présentant une impédance fonction de la fréquence telle qu'une tension induite par le champ magnétique alternatif dans les circuits résonnants des transpondeurs (50) présentent un maximum dans la plage de la fréquence de fonctionnement $f_B$.

**2.** Dispositif de lecture de transpondeurs selon la revendication 1, dans lequel le dispositif d'accord présente une bobine.

**3.** Dispositif de lecture de transpondeurs selon la revendication 2, dans lequel le dispositif d'accord présente, par ailleurs, au moins un autre élément de réseau, relié à la bobine, parmi le groupe de condensateurs, résistances et bobines.

**4.** Dispositif de lecture de transpondeurs selon l'une des revendications 1 à 3, dans lequel le dispositif d'accord (56) présente un circuit résonnant.

**5.** Dispositif de lecture de transpondeurs selon l'une des revendications 1 à 4, dans lequel l'impédance fonction de la fréquence du dispositif d'accord (56) est variable.

**6.** Dispositif de lecture de transpondeurs selon la revendication 5, dans lequel le circuit résonnant du dispositif d'accord (56) présente une bobine (64) et un condensateur (58), l'inductance de la bobine et/ou la capacité du condensateur du circuit résonnant du dispositif d'accord (56) étant variables.

**7.** Dispositif de lecture de transpondeurs selon la revendication 5 ou 6, présentant, par ailleurs, un dispositif de commande destiné à varier l'impédance du dispositif d'accord (56), jusqu'à ce qu'une tension induite par le champ magnétique alternatif dans les circuits résonnants dans les transpondeurs (50) présente un maximum dans la plage de la fréquence de fonctionnement $f_B$.

**8.** Procédé pour lire une pluralité de transpondeurs passifs inductifs (50) présentant un circuit résonnant, aux étapes suivantes consistant à :

générer un champ magnétique alternatif à fréquence de fonctionnement $f_B$ ;
placer la pluralité de transpondeurs (50) dans le champ magnétique alternatif de sorte que les transpondeurs soient couplés magnétiquement l'un à l'autre ; et

recevoir des données générées par les transpondeurs en réaction à la tension induite ;

**caractérisé par** l'étape consistant à

placer un dispositif d'accord (56) dans le champ magnétique alternatif présentant une impédance fonction de la fréquence telle qu'une tension induite par le champ magnétique alternatif dans les circuits résonnants des transpondeurs présentent un maximum dans la plage de la fréquence de fonctionnement $f_B$.

9. Procédé selon la revendication 8, dans lequel l'étape du placement du dispositif d'accord (56) présente l'étape consistant à changer l'impédance du dispositif d'accord (56), jusqu'à ce que la tension induite par le champ magnétique alternatif dans les circuits résonnants des transpondeurs (50) présente un maximum dans la plage de la fréquence de fonctionnement $f_B$.

Fig. 1

Fig. 2

Fig. 3